# EUROPEAN PATENT SPECIFICATION

(11) **EP 1 058 427 B1**
(45) Date of publication and mention of the grant of the patent: **27.08.2003**
(21) Application number: 99401330.8
(22) Date of filing: 02.06.1999
(51) Int. Cl.: H04L 12/56, H04L 12/46

(54) **Method and device for establishing a routing table in a communication network**
Verfahren und Vorrichtung zur Herstellung einer Leitweglenkungstabelle in einem Kommunikationsnetz
Procédé et dispositif pour la création d'une table de routage dans un réseau de communications

(43) Date of publication of application: 06.12.2000
(73) Proprietor: THOMSON multimedia, 92100 Boulogne Billancourt (FR)
(72) Inventor: Legallais, Yvon, 92648 Boulogne Cedex (FR); Sirot, Joel, 92648 Boulogne Cedex (FR); Straub, Gilles, 92648 Boulogne Cedex (FR)
(74) Representative: Kohrs, Martin

(56) References cited:
- EP-A- 0 571 261
- TSUNG-YUAN TAI ET AL: "LAN INTERCONNECTION: A TRANSPARENT, SHORTEST-PATH APPROACH" PROCEEDINGS OF THE INTERNATIONAL CONFERENCE ON COMMUNICATIONS,US,NEW YORK, IEEE, page 1666-1670 XP000277596 ISBN: 0-7803-0006-8
- D. ANDERSON: "Fire Wire system architecture" 1998 , ADDISON WESLEY , USA XP002123887 * page 22 - page 34 *

## Description

The invention concerns a method and a device for determining a routing table in a communication network comprising buses connected by bridges. It applies among others to IEEE 1394 multi-bus networks and home communication networks.

The IEEE 1394 standard defines a high performance serial bus. An effort is currently under way to define bridges for linking several such buses within one network. The most recent document issued by the corresponding working group is the 'IEEE P1394.1 Draft Standard for High Performance Serial Bridges' of February 7, 1999.

According to the draft mentioned above, a bridge connects only two buses. Nevertheless, several paths may exist between two buses. When a device on a first bus wishes to send a message to a device on a second bus somewhere in the network, a bridge connected to the first bus has to decide whether or not to forward the message circulating on that first bus. A bridge may decide to forward or not to forward a message, depending on several criteria.

The document 'LAN interconnection: A transparent shortest-path approach' by Tsung-Yuan Tai and Mario Gerla, Proceedings of the International Conference on Communication, US, New York 1991, pages 1666-1670 XP000277596 ISBN 0-7802-0006-8 describes a network comprising routers which build forwarding databases based on periodically exchanged data.

The present invention proposes a method for establishing routing tables at the level of each bridge in order to enable the bridges to decide whether or not to forward a message from bus to bus.

The object of the invention is a method for determining a routing table in a communication network comprising buses connected by bridges, each bridge comprising two companion portals, a first portal being connected to a first bus and a second portal being connected to a second bus, each bus being identified by a unique bus identifier, each portal being identified by a unique portal identifier, said method being characterized in that it comprises the steps of:
(a) transmitting, by said given portal, routing table data stored by said given portal to the given portal's companion portal and receiving, by said given portal, routing table data from its companion portal;
(b) concatenating said received routing table data with the contents of the given portal's own routing table;
(c) broadcasting said given portal's own routing table data on the portal's local bus;
(d) receiving routing table data broadcast by other portals on the local bus and concatenating said received routing table data with contents of the given portal's own routing table;
(e) repeating the above steps by said given portal until routing data concerning all buses in the network has been received.

One of the advantages of the inventive method is that the routing table is symmetric, i.e. the same path is used to go from a device A to a device B or to go from device B to device A.

According to a preferred embodiment of the invention, the routing table data transmitted by said given portal during the first iteration of the step (a) comprises the identifier of the given portal and the identifier of the given portal's local bus; and the routing table data received by said given portal from its companion portal during the first iteration of step (a) comprises the identifier of said companion portal and the identifier of the companion portal's local bus.

According to a preferred embodiment of the invention, said routing table data transmitted, respectively received, by said given portal comprises the given portal's identifier, respectively the identifier of the given portal's companion portal.

According to a preferred embodiment of the invention, the routing table of a portal comprises the identifiers of remote buses, and for each remote bus, the identifier of the portal local to the remote bus having initially transmitted the remote bus identifier, the depth of the remote bus compared to the bus local to the given portal, and the identifier of the local portal having broadcast the routing table data comprising the remote bus identifier on the local bus.

According to a variant embodiment of the invention, the routing table data transmitted or broadcast by a given portal contains the entire routing table.

According to the above variant embodiment, the given portal stops iterating the steps (a) to (e) when the routing tables received from its companion portal and local portals contain only data which is redundant with the given portal's own routing table.

According to a preferred embodiment of the invention, the routing table data transmitted or broadcast by a given portal comprises only the part of the routing table which was not transmitted or broadcast by said given portal during a previous step.

According to a preferred embodiment, the given portal stops iterating the steps (a) to (e) when it did not receive routing data during the previous iteration.

According to a preferred embodiment, the concatenation steps include the selection of a unique path from the bus local to the given portal to any remote bus and the deletion of the non-selected paths from the routing table of the given portal.

According to a preferred embodiment, said selected path to a given remote bus is a function of the portal identifiers stored in the routing table for said given remote bus.

According to a variant embodiment, said selected path to a given remote bus is a function of the bandwidth of portals on said path.

According to a preferred embodiment, said selection is made among the shortest paths to the remote bus, paths of greater length being deleted from the routing table.

According to a preferred embodiment, a routing table is simplified for the purpose of routing messages to contain the list of remote bus identifiers and for each remote bus whether the given portal shall forward a message from the bus local to given portal to its companion portal.

Another object of the invention is a portal device adapted to be connected to a first communication bus and adapted to be linked to a companion portal device for connection to a second communication bus, said portal device being characterized in that it comprises:
- a bus interface for connection to said first communication bus;
- a switching fabric interface for connection to said companion portal device;
- a memory for storing routing table data;
- means for transmitting routing table data stored in said memory to said companion portal, for broadcasting routing table data stored in said memory on said first communication bus, for controlling said bus interface and switching fabric interface to receive or transmit routing table data, and for concatenating received routing table data with data stored in said memory during successive receive and transmit cycles relating to routing table data for remote communication buses.

Other characteristics and advantages of the invention will appear through the description of a preferred, non-limiting embodiment. This embodiment will be described with the help of the enclosed drawings among which:
- figure 1 represents a schematic diagram of one of the two portals of a bridge;
- figure 2 represents a diagram of a network comprising two buses linked by one bridge;
- figure 3 represents a diagram of a network comprising two buses linked by three bridges;
- figure 4 represents a diagram of a sample network during a first step of a routing table building method according to the preferred embodiment of the invention;
- figure 5 represents a diagram of the network of figure 4 during a second iteration of the routing table building method;
- figure 6 represents a diagram of the network of figures 4 and 5 during a third iteration of the routing table building method.

The present embodiment concerns a network comprising IEEE 1394 serial buses connected by bridges. It is clear that the invention is not limited to such a specific environment and that it can be adapted to other environments by a Man Skilled in the Art.

The present embodiment applies to asynchronous message transmission, but can be extended to other types of transmission.

For detailed information regarding the specifications of an IEEE 1394 bus, one should refer to the IEEE document 'P1394 Standard for a High Performance Serial Bus'.

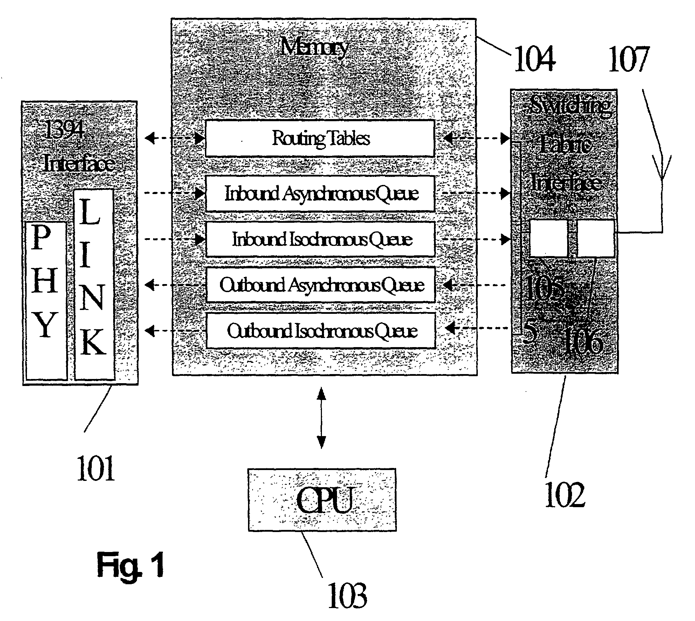

Figure 1 is a diagram of one of the two portals constituting a bridge between two IEEE 1394 buses. The other portal contains similar elements.

The portal comprises a 1394 bus interface 101, which includes a physical interface circuit ('PHY'), and a link circuit ('LINK'). The portal also comprises a switching fabric interface 102.

The switching fabric is the communication medium used by the two portals of the bridge to communicate with each other. According to the present embodiment, the switching fabric is a radio-frequency wireless link. To enable bi-directional communication through this medium, the interface 102 comprises a modulator/demodulator 105, a frequency up/down-converter 106 with appropriate oscillators and an antenna 107. Of course, other types of switching fabric may be used: coaxial cable, optical fibers, infra-red transmission and others. A given network may contain bridges of which each implements a different type of switching fabric.

The portal also comprises a memory 104 which includes an area reserved for the routing tables as well as four areas for storing inbound and outbound data, for either asynchronous or isochronous transmission.

The portal moreover comprises a microprocessor 103 or equivalent device for managing the different elements of the portal. The microprocessor also runs a program, stored in memory 104, for determining routing tables.

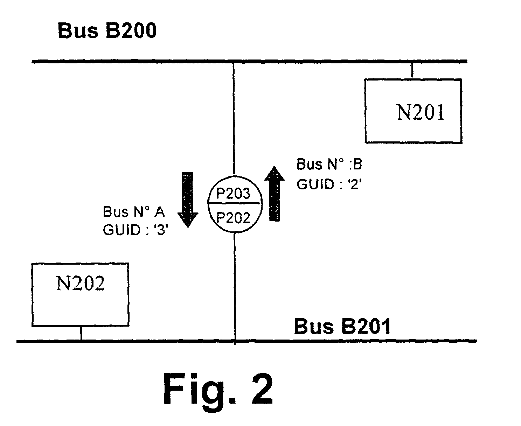

Figure 2 is a diagram of a simple network, which will be used to exemplify the communication between buses. The network comprises two buses, B200 and B201, connected by a bridge (P202P203), comprising portals P202 and P203. Since the portals P202 and P203 belong to the same bridge, they are called companion portals. A node N201 is connected to bus B200, while a node N202 is connected to bus B201.

Bus B200 is termed 'local' to node N201. It is a 'remote' bus for node N202.

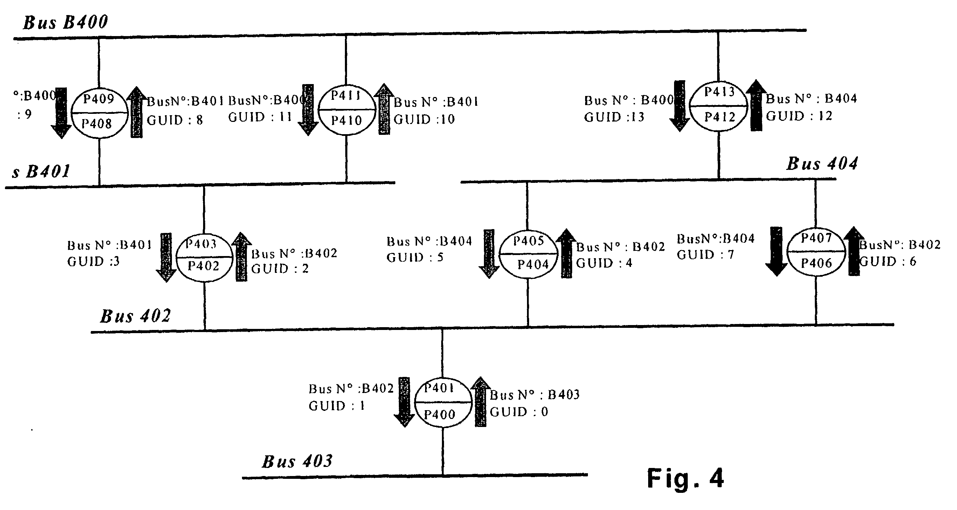

Each bus is uniquely identified within the network through a bus identifier (bus_ID). Each node connected to a bus is uniquely identified on that bus by a node identifier ('GUID'). Portals are also nodes and thus have a unique identifier. The two portals of figure 2 have respective GUIDs of '2' and '3'. For convenience, each portal is referenced 'PXYY' where 'X' identifies the figure and where 'YY' is the GUID value of the portal. Same portals on different figures always keep the same reference. This is true in particular for figures 4 to 6, which represent a same network at different stages of the routing table determination process.

A unique address of a node within the network is obtained by the combination of the bus identifier with the node identifier. When a message is sent from one node to another, the sending specifies the unique destination address of the destination node in its message header.

The depth of a first bus as compared to a second bus is defined as being the smallest number of bridges (i.e. the bridges on the shortest path) a message has to cross to go from the first bus to the second bus. Thus the depth of bus B200 compared to bus B201 is 1.

On each bus, one of the portals connected to this bus is elected Alpha portal. This Alpha portal has certain bus-related management duties on the bus. Among the Alpha portals, a Prime portal is elected. This Prime portal performs certain network-related management duties. For the purpose of the present embodiment, the Prime portal checks whether a node is connected to or removed from the network. In such a case, the network is re-initialized. The Prime portal sends a broadcast message to all nodes, and in particular to the portals, to inform them of the network re-initialization. Upon receipt of this message, each portal determines its new routing table as described below.

While the method of determination of the Prime portal is beyond the scope of this description, it can for example be determined by comparing the 64-bit EUls (Extended Unique Identifier) of the different Alpha portals. The Alpha portal having the greatest reverse order EUI is for example chosen as the Prime portal.

For a portal, the routing information consists in information which enables the portal to determine, upon receipt on the portal's bus of a message containing a destination bus identifier, whether it should forward the message to its companion portal or not.

The determination of the routing table is an iterative process. During the first step of the routing table building process, a portal determines routing information to buses of depth 1 compared to the portal's bus. During the second step, a portal determines routing information to buses of depth 2, and so on.

The process can be summarized as follows:

### (a) Step 1

During the first step, each portal sends its node identifier and local bus identifier to its companion portal. Each companion portal broadcasts these two identifiers on its local bus, in order to share this information with all other portals on its local bus. Each portal receives on its bus the pair of node and bus identifiers from the companion portals of all portals on the local bus. Each portal stores the received information, along with the pair of identifiers from its own companion portal. Once the broadcast is complete, each portal knows the identifiers of all buses of depth 1 compared to its local bus, as well as the GUID identifiers of the portals connected to these buses and part of bridges connected to the local bus. Each portal also knows the GUID identifiers of portals connected to the local bus, since the broadcast messages sent by the portals of the local bus include the message source address, i.e. the portal GUID value.

Each portal then determines whether a given remote bus appears several times in the stored information. If this is the case, this means that there exist redundant paths to this remote bus. This redundancy is eliminated by selecting only one of the bridges leading to the remote bus. If messages are to be forwarded from the local bus to the remote bus, then only the selected bridge will be used, i.e. only the portal of the selected bridge will transfer the message to its companion portal. All other bridges redundant with the selected bridge are thus 'disabled' for this particular path.

According to the present embodiment, the selected bridge is that which possesses the portal having the highest GUID identifier. All other portals of a local bus disable themselves for the transmission of messages to the remote bus for that path, once these portals have determined that they or their companion portal are not part of the selected bridge.

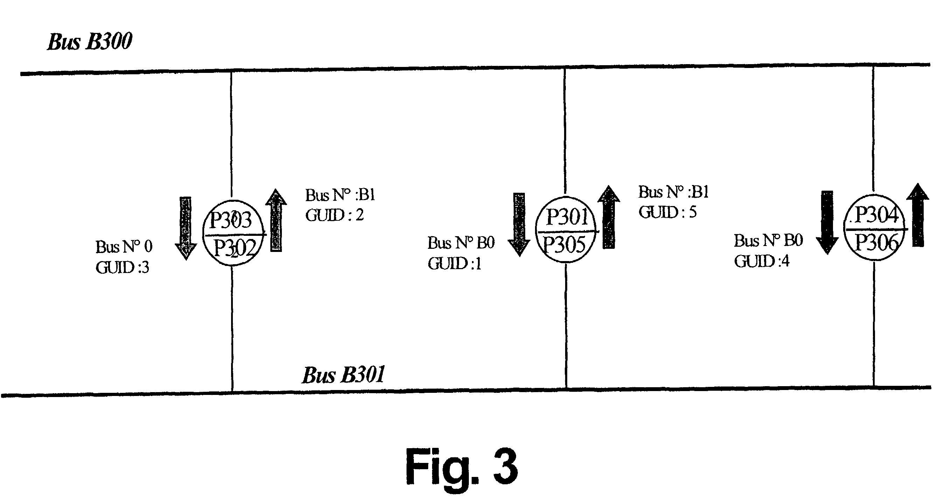

Figure 3 is a diagram of a network comprising two buses B300 and B301, connected through three redundant bridges (P303P302), (P301P305) and (P304P306). According to the criterion defined above, the bridge selected for forwarding messages from bus B300 to bus B301 and vice-versa is the bridge (P304P306), since '6' is the greatest GUID.

According to a variant of the embodiment, the selected bridge is the bridge possessing the greatest bandwidth for transmitting data. In order to enable portals to take decisions based on this criterion, information relating to the bandwidth of a bridge has to be broadcast along with the bus and portal identifiers, unless such information is already known by the portals through some other means, such as a preprogrammed list. As for the preferred embodiment, all portals of the local bus which belong to redundant bridges and which do not admit the greatest bandwidth disable themselves for the transmission of messages to the remote bus. Should several redundant bridges have the same bandwidth, the criterion described in relation with the preferred embodiment is used to select a unique bridge.

It is clear that other selection criteria may be used to select a unique bridge among a number of redundant bridges.

At the end of step 1, each portal knows whether it should forward messages circulating on its local bus and addressed to the bus of depth 1 connected to its companion portal or not. At this level, redundant bridges to buses of depth 1 compared to the local bus have been disabled.

The information held by each portal has the following format:

**Table 1**

| Remote Bus Identifier | Number of Bridges on the Path (depth) | Local Portal GUID | Remote Portal GUID |
|---|---|---|---|
| ... | | | |
| | | | |
| | | | |

This table is the routing table to which additional information will be added during each subsequent step of the present process. A simplified version of this table will be described later.

As already mentioned, the local portal GUIDs stored in the table are obtained from the messages sent by the local portals.

### (b) Step 2

Following the end of step 1, each portal of a bridge, which has not been disabled, sends the content of its routing table to its companion portal. The companion portal broadcasts the content of the table on its local bus. All portals receive and store the tables transmitted on their local bus and add the content of these tables to their own routing table. They also add the table received from their respective companion portal. As in step 1, each portal connected to a given bus has the same information at this stage.

Preferably, each local portal transmits on its local bus only the part of the table of its companion table which is not redundant with information transmitted during an earlier step, i.e. information not already present in the local portal's own table. The local portal simply compares the table received from its companion portal with the contents of its own table to determine whether new information is to be stored and transmitted or not.

Once the tables have been concatenated, each portal checks for redundant paths to buses of depth 2 compared to the local bus, applying a criterion similar to the criterion employed during step 1 to select a single path among equivalent paths. According to the present embodiment, the path, which is selected, is the path containing the portal having the highest GUID identifier. For the present embodiment, only the GUID identifiers of the portals of the bridges at the start and at the end of a path are taken into account.

Of course, another criterion could be chosen, as long as all portals choose in an unambiguous manner a same single path among redundant paths.

Paths comprising two bridges between buses already linked by a path comprising a single bridge (i.e. already linked by a shorter path) are discarded.

At the end of step 2, each portal knows whether it should forward messages circulating on its local bus and addressed to buses of depth 2 compared to the local bus.

### (c) Step n

Step n consists in repeating the process of step 2, replacing '2' by 'n'. As for step 2, shorter paths between two buses are preferred over longer paths between the same two buses.

According to the preferred embodiment, the process is stopped by a portal when it receives, from its companion portal and from portals local to its bus, information which is fully redundant with the contents of its own routing table.

The application of the iterative process to a sample network will now be described. The description below contains additional details and rules compared to the general rules defined above. The sample network is illustrated by figure 4. It comprises a total of five buses B400 to B404 and seven bridges comprising portals with GUID values of 0 to 13.

The topology of the network is as follows:

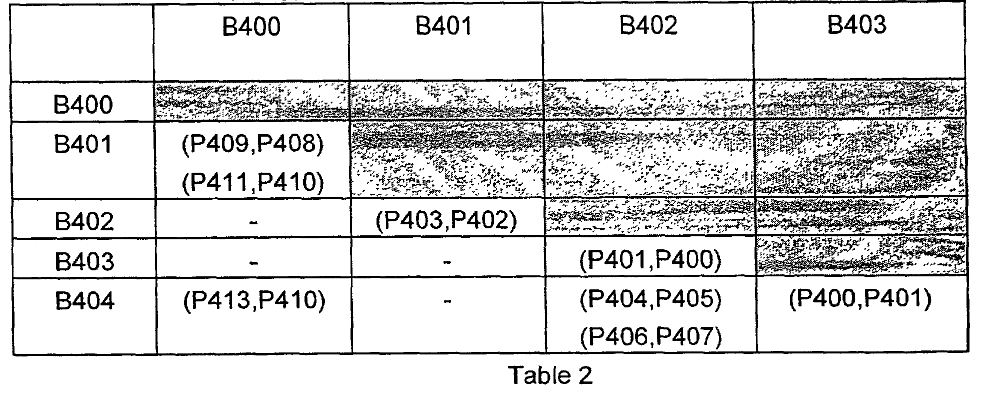

The first portal of a bridge indicated in a pair (PXYY,PXYY) is connected to the bus indicated in the first line of the table, while the second portal of a bridge is connected to the bus indicated in the first column of the table.

In figures 4 to 6, the vertical arrows and nearby bus identifiers and GUID values indicate the information sent from a portal to its companion portal to be broadcast on the local bus of the companion portal.

The routing table building process will be described in detail for buses B400 and B401. Since the maximum depth in the network is 3, the maximum number of iterations to be carried out by any portal in the network is also 3.

### (a) Step 1 (Bus B400)

Portal P409 receives from its companion portal P408 the information:
- companion portal GUID: 8
- companion portal bus number: B401.

Portal P411 receives from its companion portal P410 the information:
- companion portal GUID: 10
- companion portal bus number: B401.

Portal P413 receives from its companion portal P412 the information:
- companion portal GUID: 12
- companion portal bus number: B404.

Each of the above portals broadcasts this information on bus B400 and listens to the broadcast of the other portals. Each of the above portals then builds the following table:

**Table 3**

| Remote Bus Number | Number of Bridges on the Path (depth) | Local Portal GUID | Remote Portal GUID |
|---|---|---|---|
| B401 | 1 | 9 | 8 |
| B401 | 1 | 11 | 10 |
| B404 | 1 | 13 | 12 |

Each portal then checks for redundant paths. Since bus B401 appears twice in the table, the portals have to select which path is to be used among the two existing redundant paths to the bus B 401. Since the greatest GUID value among the GUID values of portals P408, P409, P410 and P411 is 11, the path given by the second line of the table is selected. The other path is deleted from table 3 to yield the routing table at the end of step 1. For the purpose of routing messages, this table 3 can be simplified as follows, since only the destination bus and forwarding portal need to be known for this purpose:

**Table 4**

| Destination (Remote) Bus Number | Forwarding Portal on local bus |
|---|---|
| B401 | 11 |
| B404 | 13 |

This routing table is interpreted as follows:
- Packets from bus B400 to bus B401 will be forwarded by portal 11.
- Packets from bus B400 to bus B404 will be forwarded by portal 13.

Of course, the routing table may also be presented or stored under other formats than the format given in table 4.

For the purpose of pursuing the iterative process, the information of table 3 is kept in memory.

### (b) Step 1 (Bus B401)

Portal P408 receives from its companion portal the following information:
- companion portal GUID: 9
- companion portal bus number: B400

Portal P410 receives from its companion portal the information:
- companion portal GUID: 11
- companion portal bus number: B400

Portal P403 receives from its companion portal the information:
- companion portal GUID: 2
- companion portal bus number: B402.

Each of the above portals broadcasts this information on bus B401 and listens to the broadcast of the other portals. Each of the above portals then builds the following table:

**Table 5**

| Remote Bus Number | Number of Bridges on the Path (depth) | Local Portal GUID | Remote Portal GUID |
|---|---|---|---|
| B400 | 1 | 8 | 9 |
| B400 | 1 | 10 | 11 |
| B402 | 1 | 3 | 2 |

According to the rules described above, each portal on bus B401 determines the following simplified routing table:

**Table 6**

| Destination (Remote) Bus Number | Forwarding Portal on local bus |
|---|---|
| B400 | 10 |
| B402 | 3 |

This table is interpreted as follows:
- Packets from bus B401 to bus B400 will be forwarded by portal P410
- Packets from bus B401 to bus B402 will be forwarded by portal P403

Note that the path between bus B400 and B401 is selected with the same criterion as before, and consequently, the same path is selected. This means that a message from a bus A using a given path to reach a bus B will use the same path as a message getting from bus B to bus A, and that in case a portal is disabled during a step of the process, its companion portal is also disabled.

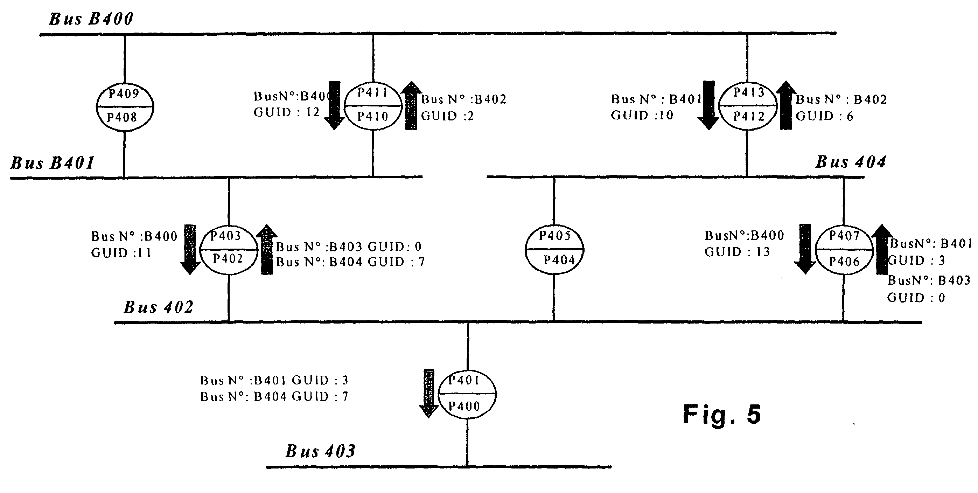

Figure 5 indicates for the entire network of figure 4 which bridges have been disabled during step 1. Disabled bridges are indicated in grey. While portals of bridges disabled during step 1 do not forward routing information, they may continue to receive routing information circulating on their respective local bus.

### (c) Step 2 (Bus B400)

Portal P408 having been disabled during step 1, each one of the portals P410 and P412 forwards its routing table to its companion portal on bus B400. The figure 5 indicates what information is transmitted to each portal. Only information, which is non-redundant, is sent, as indicated on figure 5. This is why no information is shown for portal P400: the relevant information corresponding to bus B403 was already sent during step 1.

According to the present embodiment, in order to reduce the amount of data sent on the buses, each portal does not send to its companion portal information it already received from its companion portal during a previous step (since this information has already been broadcast during that earlier step). Information is only forwarded if it is not already redundant with information sent during an earlier step. In other words, when during step n, a portal does not receive from another portal on its local bus any information relating to a bus of depth n, then it does not forward information to its companion portal during subsequent steps.

According to an advantageous variant of the invention, when a portal has no new data to transmit to its companion portal, it notifies its companion portal that the latter will not receive any further information during the present step and potential future steps of the process. A time-out mechanism may also be implemented at the level of the companion portal.

According to a variant of the present embodiment, each portal forwards its entire non-simplified routing table to its companion portal. Although bandwidth is wasted in this case, the table processing at the level of each portal may be simplified.

On bus B400, every portal has the following information, in addition to the information received during step 1:

**Table 7**

| Remote Bus Number | Number of Bridges on the Path (depth) | Local Portal GUID | Remote Portal GUID |
|---|---|---|---|
| B402 | 2 | 11 | 2 |
| B402 | 2 | 13 | 6 |

There are two redundant paths between bus B400 and B402, one path leading through bus B401, the other through B402. Since the highest GUID value among the four portals concerned is 13, the second path in the table above is selected while the first path is deleted. Each one of the portals on bus B400 then has access to the following information:

**Table 8**

| Remote Bus Number | Number of Bridges on the Path (depth) | Local Portal GUID | Remote Portal GUID |
|---|---|---|---|
| B401 | 1 | 11 | 10 |
| B404 | 1 | 13 | 12 |
| B402 | 2 | 13 | 6 |

The simplified table can now easily be determined from table 8:

**Table 9**

| Destination Bus Number | Forwarding Portal |
|---|---|
| B401 | 11 |
| B402 | 13 |
| B404 | 13 |

### (d) Step 2 (Bus B401)

After receiving the routing information sent by companion portals P411 and P402, each one of the portals P408, P410 and P403 on bus B401 adds the following information for depth 2 buses to the information received during step 1 for depth 1 buses:

**Table 10**

| Remote Bus Number | Number of Bridges on the Path (depth) | Local Portal GUID | Remote Portal GUID |
|---|---|---|---|
| B404 | 2 | 10 | 12 |
| B404 | 2 | 3 | 7 |
| B403 | 2 | 0 | 0 |

Again, there is a redundant path, in this case to bus B404. Applying the same rule as before, the path appearing first in the table 9 is selected (GUID of the remote portal equal to 12), while the path appearing on the line below is deleted. Adding the resulting table to the information determined by the portals of bus B401 during step 1, one obtains:

**Table 11**

| Remote Bus Number | Number of Bridges on the Path (depth) | Local Portal GUID | Remote Portal GUID |
|---|---|---|---|
| B400 | 1 | 10 | 11 |
| B402 | 1 | 3 | 2 |
| B403 | 2 | 3 | 0 |
| B404 | 2 | 10 | 13 |

For bus B401, the simplified table is:

**Table 12**

| Destination Bus Number | Forwarding Portal |
|---|---|
| 0 | 10 |
| 2 | 3 |
| 3 | 3 |
| 4 | 10 |

Step 2 is thus completed for portals on buses B400 and B401.

### (e) Step 3 (Bus B400)

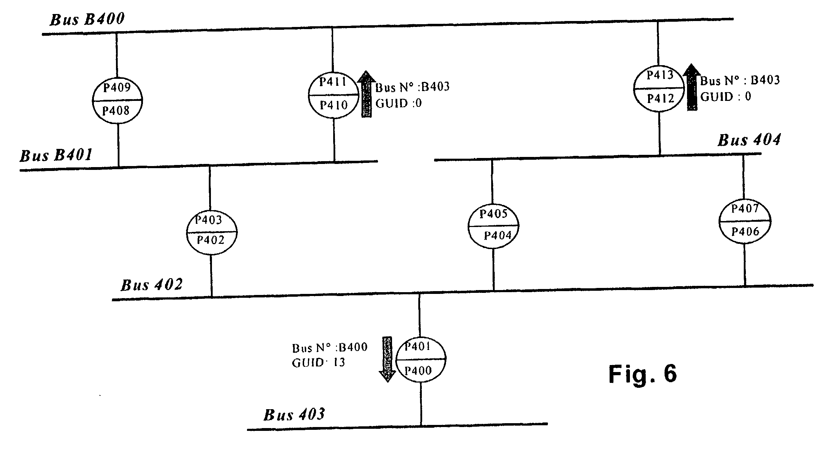

At this stage, only three portals have non-redundant information to transmit concerning depth 3 buses (i.e. portals (P411,P410), (P413,P412) and (P401,P400)), as illustrated by figure 6. The other active (i.e. non-disabled) portals did not receive depth 2 bus information from other portals on their local bus during step 2 and thus do not forward any information during step 3.

The additional information received by each portal of bus B400 at the beginning of step 3 is the following:

**Table 13**

| Remote Bus Number | Number of Bridges on the Path (depth) | Local Portal GUID | Remote Portal GUID |
|---|---|---|---|
| B403 | 3 | 11 | 0 |
| B403 | 3 | 13 | 0 |

Applying the selection rule, the second path to bus B403 is selected (GUID of value 13), while the first is deleted.

Each portal on bus B400 then holds the following table:

**Table 14**

| Remote Bus Number | Number of Bridges on the Path | Local Portal GUID | Remote Portal GUID |
|---|---|---|---|
| 1 | 1 | 11 | 10 |
| 4 | 1 | 13 | 12 |
| 2 | 2 | 13 | 6 |
| 3 | 3 | 13 | 0 |

The simplified routing table is then:

**Table 15**

| Destination Bus Number | Forward Portal |
|---|---|
| 1 | 11 |
| 4 | 13 |
| 2 | 13 |
| 3 | 13 |

This is the final table for bus B400. There are no buses of depth 4 relative to bus B400 in the network.

### (f) Step 3 (Bus B401)

The network does not contain any buses of depth 3 compared to bus B401. Since portals of bus B401 do not receive any non-redundant information from their companion portals, their final tables are those established during step 2.

At this step, all buses have established the route to all the other buses in the network.

When a message is circulating on a bus, each portal local to that bus determines the destination bus identifier contained in the message header and checks in its routing table whether it should forward the message or whether the message is forwarded by another portal. Thus all the information a portal needs to know is the list of remote bus identifiers and for each of these buses a flag indicating whether the portal is or is not part of a path to the remote bus.

## Claims

1. Method for determining a routing table in a communication network comprising buses connected by bridges, each bridge comprising two companion portals, a first portal being connected to a first bus and a second portal being connected to a second bus, each bus being identified by a unique bus identifier, each portal being identified by a unique portal identifier, said method comprising the steps of:
(a) transmitting, by one of said given portals, routing table data stored by said given portal to the given portal's companion portal and receiving, by said given portal, routing table data from its companion portal;
(b) concatenating said received routing table data with the contents of the given portal's own routing table;
(c) broadcasting said given portal's own routing table data on the portal's local bus;
(d) receiving routing table data broadcast by other portals on the local bus and concatenating said received routing table data with contents of the given portal's own routing table;
(e) repeating the above steps by said given portal until routing data concerning all buses in the network has been received.

2. Method according to claim 1, wherein
- the routing table data transmitted by said given portal during the first iteration of the step (a) comprises the identifier of the given portal and the identifier of the given portal's local bus;
- the routing table data received by said given portal from its companion portal during the first iteration of step (a) comprises the identifier of said companion portal and the identifier of the companion portal's local bus.

3. Method according to claim 2, wherein said routing table data transmitted, respectively received, by said given portal comprises the given portal's identifier, respectively the identifier of the given portal's companion portal.

4. Method according to one of the claims 2 or 3, wherein the routing table of a portal comprises the identifiers of remote buses, and for each remote bus, the identifier of the portal local to the remote bus having initially transmitted the remote bus identifier, the depth of the remote bus compared to the bus local to the given portal, and the identifier of the local portal having broadcast the routing table data comprising the remote bus identifier on the local bus.

5. Method according to one of the claims 1 to 4, wherein the routing table data transmitted or broadcast by a given portal contains the entire routing table.

6. Method according to claim 5 as dependent on claim 4, wherein the given portal stops iterating the steps (a) to (e) when the routing tables received from its companion portal and local portals contain only data which is redundant with the given portal's own routing table.

7. Method according to one of the claims 1 to 4, wherein the routing table data transmitted or broadcast by a given portal comprises only the part of the routing table which was not transmitted or broadcast by said given portal during a previous step.

8. Method according to claim 7, wherein the given portal stops iterating the steps (a) to (e) when it did not receive routing data during the previous iteration.

9. Method according to one of the claims 1 to 8, wherein the concatenation steps include the selection of a unique path from the bus local to the given portal to any remote bus and the deletion of the non-selected paths from the routing table of the given portal.

10. Method according to claim 4 and claim 9, wherein said selected path to a given remote bus is a function of the portal identifiers stored in the routing table for said given remote bus.

11. Method according to claims 4 and 9 or claims 4 and 10, wherein said selected path to a given remote bus is a function of the bandwidth of portals on said path.

12. Method according to claims 9 to 11, wherein said selection is made among the shortest paths to the remote bus, paths of greater length being deleted from the routing table.

13. Method according to one of the preceding claims, wherein a routing table is simplified for the purpose of routing messages to contain the list of remote bus identifiers and for each remote bus whether the given portal shall forward a message from the bus local to given portal to its companion portal.

14. Portal device adapted to be connected to a first communication bus and adapted to be linked to a companion portal device for connection to a second communication bus, said portal device being **characterized in that** it comprises:
- a bus interface (101) for connection to said first communication bus;
- a communication medium interface (102) for connection to said companion portal device;
- a memory (104) for storing routing table data;
- means (103) for transmitting routing table data stored in said memory to said companion portal, for broadcasting routing table data stored in said memory on said first communication bus, for controlling said bus interface and communication medium interface to receive or transmit routing table data, and for concatenating received routing table data with data stored in said memory during successive receive and transmit cycles relating to routing table data for remote communication buses.

## Patentansprüche

1. Verfahren zur Bestimmung einer Routingtabelle in einem Kommunikationsnetz mit über Brücken verbundenen Bussen, wobei jede Brücke zwei Begleitportale enthält, ein erstes Portal mit einem ersten Bus und ein zweites Portal mit einem zweiten Bus verbunden ist, und jeder Bus durch einen einzigen Busidentifizierer identifiziert wird, jedes Portal durch einen einzigen Portalidentifizierer identifiziert wird, mit folgenden Schritten:
(a) Übertragung durch eines der bestimmten Portale von Routingtabellen-Daten, die durch das bestimmte Portal gespeichert sind, zu dem Begleitportal des bestimmten Portals und Empfang von Routingtabellen-Daten von ihrem Begleitportal durch das bestimmte Portal,
(b) Verknüpfung der empfangenen Routingtabellen-Daten mit dem Inhalt der zu dem bestimmten Portal gehörenden Routingtabelle,
(c) Übertragung der zu dem bestimmten Portal gehörenden Routingtabellen-Daten auf dem örtlichen Bus des Portals,
(d) Empfang von Routingtabellen-Daten, die über andere Portale auf dem örtlichen Bus gesendet werden, und Verknüpfung der empfangenen Routingtabellen-Daten mit dem Inhalt der zu dem Portal gehörenden Routingtabelle,
(e) Wiederholung der obigen Schritte durch das bestimmte Portal, bis alle Busse in dem Netzwerk betreffenden Routingdaten empfangen worden sind.

2. Verfahren nach Anspruch 1, wobei
- die Routingtabellen-Daten, die durch das bestimmte Portal während der ersten Iteration des Schritts (a) übertragen werden, den Identifizierer des bestimmten Portals und den Identifizierer des örtlichen Bus des Portals enthalten,
- die durch das bestimmte Portal von ihrem Begleitportal während der ersten Iteration des Schritts (a) empfangenen Routingtabellen-Daten den Identifizierer des Begleitportals und den Identifizierer des örtlichen Busses des Begleitportals enthalten.

3. Verfahren nach Anspruch 2, wobei die durch das bestimmte Portal übertragenen bzw. empfangenen Routingtabellen-Daten den bestimmten Identifizierer des Portals bzw. den Identifizierer des Begleitportals des bestimmten Portals enthalten.

4. Verfahren nach einem der Ansprüche 2 oder 3, wobei die Routingtabelle eines Portals die Identifizierer von entfernten Bussen und für jeden entfernten Bus enthält, und der Identifizierer des örtlichen Portals zu dem entfernten Bus anfänglich den Identifizierer des entfernten Bus übertragen hat, die Tiefe des entfernten Bus verglichen mit dem örtlichen Bus zu dem bestimmten Portal und der Identifizierer des örtlichen Portals die Sendung der Routingtabellen-Daten mit dem Identifizierer des entfernten Bus auf dem örtlichen Bus enthalten.

5. Verfahren nach einem der Ansprüche 1 bis 4, wobei die Routingtabellen-Daten durch ein bestimmtes Portal übertragen oder gesendet werden, das die gesamte Routingtabelle enthält.

6. Verfahren nach Anspruch 5, abhängig von Anspruch 4, wobei das bestimmte Portal die Iteration der Schritte (a) bis (e) anhält, wenn die von ihrem Begleitportal und den örtlichen Portalen empfangenen Routingtabellen nur Daten enthalten, die zu der Routingtabelle des bestimmten Portals redundant sind.

7. Verfahren nach einem der Ansprüche 1 bis 4, wobei die Routingtabelle, die durch ein bestimmtes Portal übertragen oder gesendet wird, nur den Teil der Routingtabelle enthält, der nicht während eines vorangehenden Schritts durch das bestimmte Portal übertragen oder gesendet wurde.

8. Verfahren nach Anspruch 7, wobei das bestimmte Portal die Iteration der Schritte (a) bis (e) enthält, wenn es während der vorangehenden Iteration keine Routingdaten empfangen hat.

9. Verfahren nach einem der Ansprüche 1 bis 8, wobei die Verknüpfungsschritte die Wahl eines einzigen Wegs von dem örtlichen Bus zu dem bestimmten Portal zu einem entfernten Bus und die Beseitigung der nicht-gewählten Wege aus der Routingtabelle des bestimmten Portals enthalten.

10. Verfahren nach Anspruch 4 und Anspruch 9, wobei der zu einem bestimmten entfernten Bus gewählte Weg abhängig ist von den Portal-Identifizierern, die in der Routingtabelle für den bestimmten entfernten Bus gespeichert sind.

11. Verfahren nach Ansprüchen 4 und 9 oder nach Ansprüchen 4 und 10, wobei der für einen bestimmten entfernten Bus gewählte Weg von der Bandbreite der Portale auf dem Weg abhängig ist.

12. Verfahren nach Ansprüchen 9 bis 11, wobei die Auswahl unter den kürzesten Wegen zu dem entfernten Bus erfolgt und Wege mit größerer Länge aus der Routingtabelle gelöscht werden.

13. Verfahren nach einem der vorangehenden Ansprüche, wobei eine Routingtabelle für den Zweck des Routing von Nachrichten vereinfacht wird und die Liste der Identifizierer des entfernten Bus und für jeden entfernten Bus enthält, ob das bestimmte Portal eine Nachricht von dem örtlichen Bus zu dem bestimmten Portal zu seinem Begleitportal weitergeleitet werden soll.

14. Portalvorrichtung zum Anschluss an einen ersten Kommunikationsbus und zur Verknüpfung mit einer Begleitportal-Vorrichtung zur Verbindung mit einem zweiten Kommunikationsbus, **gekennzeichnet durch**:
- eine Busschnittstelle (101) für die Verbindung mit dem ersten Kommunikationsbus,
- eine Schnittstelle (102) für ein Kommunikationsmedium zur Verbindung mit der Begleitportal-Vorrichtung,
- ein Speicher (104) zur Speicherung von Routingtabellen-Daten,
- Mittel (103) zur Übertragung der in dem Speicher gespeicherten Routingtabellen-Daten zu dem Begleitportal, zur Sendung von in dem Speicher gespeicherten Routingtabellen-Daten auf dem ersten Kommunikationsbus, zur Steuerung der Busschnittstelle und der Kommunikationsmedium-Schnittstelle zum Empfang oder zur Übertragung von Routingtabellen-Daten und zur Verkettung von empfangenen Routingtabellen-Daten mit in dem Speicher gespeicherten Daten während aufeinanderfolgender Empfangs- und Übertragungs-Zyklen für die Routingtabellen-Daten für die entfernten Kommunikationsbusse.

## Revendications

1. Méthode de détermination d'une table de routage dans un réseau de communications comprenant des bus reliés par des ponts, chaque pont comprenant deux portails compagnons, un premier portail étant relié à un premier bus et un second portail étant relié à un second bus, chaque bus étant identifié par un identificateur de bus unique, chaque portail étant identifié par un identificateur de portail unique, ladite méthode comprenant les étapes de :
(a) transmission, par l'un desdits portails donnés, de données de table de routage stockées par ledit portail donné au portail compagnon du portail donné et de réception, par ledit portail donné, de données de table de routage issues de son portail compagnon ;
(b) concaténation desdites données de table de routage reçues avec le contenu de la propre table de routage du portail donné ;
(c) diffusion desdites données de la propre table de routage du portail donné sur le bus local du portail ;
(d) réception des données de table de routage diffusées par d'autres portails sur le bus local et de concaténation desdites données de table de routage reçues avec le contenu de la propre table de routage du portail donné ;
(e) répétition des étapes ci-dessus par ledit portail donné jusqu'à ce que les données de routage concernant tous les bus du réseau aient été reçues.

2. Méthode selon la revendication 1, où
- les données de table de routage transmises par ledit portail donné au cours de la première itération de l'étape (a) comprennent l'identificateur du portail donné et l'identificateur du bus local du portail donné ;
- les données de table de routage reçues par ledit portail donné de son portail compagnon au cours de la première itération de l'étape (a) comprennent l'identificateur dudit portail compagnon et l'identificateur du bus local du portail compagnon.

3. Méthode selon la revendication 2, où lesdites données de table de routage transmises, respectivement reçues, par ledit portail donné comprennent l'identificateur du portail donné, respectivement l'identificateur du portail compagnon du portail donné.

4. Méthode selon l'une des revendications 2 ou 3, où la table de routage d'un portail comprend les identificateurs de bus distants, et pour chaque bus distant, l'identificateur du portail local pour le bus distant ayant initialement transmis l'identificateur de bus distant, la profondeur du bus distant par rapport au bus local pour le portail donné, et l'identificateur du portail local ayant diffusé les données de table de routage comprenant l'identificateur de bus distant sur le bus local.

5. Méthode selon l'une des revendications 1 à 4, où les données de table de routage transmises ou diffusées par un portail donné contiennent toute la table de routage.

6. Méthode selon la revendication 5, comme dépendante de la revendication 4, où le portail donné arrête de répéter les étapes (a) à (e) lorsque les tables de routage reçues de son portail compagnon et de portails locaux ne contiennent que des données qui sont redondantes avec la propre table de routage du portail donné.

7. Méthode selon l'une des revendications 1 à 4, où les données de table de routage transmises ou diffusées par un portail donné ne comprennent que la portion de la table de routage qui n'a pas été transmise ou diffusée par ledit portail donné au cours d'une étape précédente.

8. Méthode selon la revendication 7, où le portail donné arrête de répéter les étapes (a) à (e) lorsqu'il n'a pas reçu de données de routage au cours de l'itération précédente.

9. Méthode selon l'une des revendications 1 à 8, où les étapes de concaténation incluent la sélection d'un chemin unique allant du bus local pour le portail donné à n'importe quel bus distant et la suppression des chemins non sélectionnés de la table de routage du portail donné.

10. Méthode selon la revendication 4 et la revendication 9, où ledit chemin sélectionné menant à un bus distant donné est une fonction des identificateurs de portails stockés dans la table de routage pour ledit bus distant donné.

11. Méthode selon les revendications 4 et 9 ou les revendications 4 et 10, où ledit chemin sélectionné menant à un bus distant donné est une fonction de la bande passante des portails sur ledit chemin.

12. Méthode selon les revendications 9 à 11, où ladite sélection se fait parmi les chemins les plus courts menant au bus distant, les chemins plus longs étant supprimés de la table de routage.

13. Méthode selon l'une des revendications précédentes, où une table de routage est simplifiée à des fins de routage de messages pour contenir la liste des identificateurs de bus distants et, pour chaque bus distant, si le portail donné doit transférer ou non un message issu du bus local pour le portail donné à son portail compagnon.

14. Dispositif de portail adapté pour être connecté à un premier bus de communication et adapté pour être relié à un dispositif de portail compagnon pour une connexion à un second bus de communication, ledit dispositif de portail étant **caractérisé en ce qu'**il comprend :
- une interface de bus (101) pour une connexion audit premier bus de communication ;
- une interface de médium de communication (102) pour une connexion audit dispositif de portail compagnon ;
- une mémoire (104) pour le stockage de données de table de routage ;
- des moyens (103) de transmission de données de table de routage stockées dans ladite mémoire audit portail compagnon, de diffusion de données de table de routage stockées dans ladite mémoire sur ledit premier bus de communication, de commande de ladite interface de bus et de l'interface de médium de communication pour recevoir ou transmettre les données de table de routage, et de concaténation des données de table de routage reçues avec les données stockées dans ladite mémoire au cours de cycles successifs de réception et de transmission concernant les données de table de routage pour les bus de communication distants.
